# EUROPEAN PATENT SPECIFICATION

(11) **EP 0 540 183 B1**
(45) Date of publication and mention of the grant of the patent: **17.01.1996**
(21) Application number: 92309011.2
(22) Date of filing: 02.10.1992
(51) Int. Cl.: B60R 13/06, B60J 10/00

(54) **Sealing strip**
Dichtleiste
Profil d'étanchéité

(30) Priority: 30.10.1991 GB 9123040
(43) Date of publication of application: 05.05.1993
(73) Proprietor: Standard Products Limited, Huntingdon Cambridgeshire PE18 6DD (GB)
(72) Inventor: Bickley, Alan Charles, Sawtry, Cambridgeshire PE17 5PQ (GB); Harris, David Strachan, Peterborough, Cambridgeshire PE2 6YT (GB)
(74) Representative: Nash, David Allan

(56) References cited:
- EP-A- 0 277 425
- EP-A- 0 372 745
- DE-A- 3 609 050

## Description

This invention relates to an elongate sealing strip of the type comprising a longitudinal reinforcing carrier member to which is bonded a region of a relatively soft elastomeric material. Such elongate sealing strips are commonly used in the automobile industry for sealing around the periphery of a vehicle body opening or a closure for a vehicle body opening; they may also be used as waistseals (i.e. along the waist line of a motor vehicle), glass run channels, and lightseals (e.g. in the surround of a windscreen).

Sealing strips employed in the automotive industry are generally formed from an elastomeric material such as a rubber or plastics material which is resilient, and relatively soft. The sealing strips often include fins or lips which are capable of flexing to act as sealing lips or gripping elements. Generally, the soft characteristics of the sealing strip compliment the hard edges of the motor vehicle to provide an aesthetic finished product which resists the ingress of water and does not suffer unduly from wind noise at high speed. Many different configurations of automotive sealing strips are known, including those which possess a carrier member formed from a metal (such as aluminium or steel) and which may be solid or may be provided with apertures in order to provide a degree of workability to the carrier member. Carrier members are also known which are woven from a metal wire.

Sealing strips, including those having a metal core as carrier member, are generally formed by the well known extrusion technique in which a continuous length of the strip is extruded and cut to desired lengths. Some sealing strips having an apertured metal carrier member may be readily bent to shape when being fitted to a motor vehicle; others however, including those having a solid metal carrier member, are normally conformed by the manufacturer to the desired vehicle body opening or closure although roll forming or simple bending can be employed if the change in shape is not too severe. Those strips having a solid steel core as carrier member can only be preformed into the desired configuration using the technique of stretch bending in which the length of strip is placed in a special machine which both bends and stretches the part at the same time. This is an expensive operation.

DE-3609050-A1 and the corresponding US-4676856-A disclose a weatherstrip having a rubber base portion embedded in which is a core member formed of a thermoplastic synthetic resin such as a vinyl chloride resin, ABS resin, polypropylene or nylon. To alter the shape of the weatherstrip, the weatherstrip is heated (for example by immersion in a heated bath) which softens the core member and then, while the core member is in the softened state, the weatherstrip is bent to the desired shape, after which the weatherstrip is cooled so that the core member again is rigid.

The present invention makes use of the fact that certain thermoplastics materials are very rigid at ambient temperatures but are also flexible at elevated temperatures. If a carrier member (core) of a conventional sealing strip were to be made of such a thermoplastics material, it would possess the shape-sustaining characteristics of a metal core, but would also be heat-formable into a desired structure.

Thus, in accordance with a first aspect of the present invention, there is provided an elongate strip comprising a longitudinal reinforcing carrier member bonded to which is a region of a relatively soft elastomeric material, wherein the carrier member is formed from a thermoplastics material which is rigid at ambient temperatures and flexible at an elevated temperature at which the said elastomeric material is substantially stable, characterised in that the carrier member formed of thermoplastics material includes an electrically conductive component to enable the carrier member to be heated by an induction technique.

Preferably, at ambient temperatures below about 50°C, the thermoplastics material should have a Shore hardness of at least 90°, and more preferably at least 95° on the A scale. At an elevated temperature at which the elastomeric material is substantially stable, e.g. 200°C, the thermoplastics material becomes flexible so that the carrier member may be bent relatively easily. At the said elevated temperature, the elastomeric material bonded to the carrier member should be substantially stable by which we mean that the necessary elastomeric qualities of the material are not substantially altered at the temperature in the short time necessary to bend the part before it is cooled.

In the present invention, the elongate strip is formed by an extrusion process in which the carrier member having a desired cross-section is introduced into the extruder in conventional fashion and at least partially coated with the relatively soft elastomeric material. It has been found that a wide range of elastomeric materials are suitable for use in this invention. Of particular merit are the aliphatic olefin rubbers, particularly ethylene-propylene-diene ternary polymers, commonly known as EPDM elastomers, and also the styrene butadiene rubbers commonly referred to as SBR. The soft material may also be a thermoplastic elastomer such as those known by the registered Trade Marks SANTOPRENE and VYRAM (by Monsanto). Alternatively, the soft elastomeric material may be a thermoplastics material such as a polypropylene.

Preferably, the elastomeric material consists of a full or partial coating on the carrier. Moreover, the elastomeric material bonded to the carrier member may additionally take the form of one or more than one projection which projects from the carrier member to define sealing or gripping elements such as lips or fins. Such elements are well known in the art to assist in the gripping of a sealing strip to a part of a vehicle body and for providing sealing and weather resistance.

The carrier member may be for example be formed from a high density polyolefin, such as a polyethylene or a polypropylene.

According to a second aspect of the present invention, there is provided an elongate sealing strip for sealing around the periphery of a vehicle body opening or a closure for a vehicle body opening, comprising a channel-shaped portion having a longitudinal reinforcing carrier member bonded to which is a region of a relatively soft elastomeric material, wherein the member is formed from a thermoplastics material which is rigid at ambient temperatures and flexible at an elevated temperature at which the said elastomeric material is substantially stable; characterised in that the carrier member formed of thermoplastics material includes an electrically conductive component to enable the carrier member to be heated by an induction technique.

According to a third aspect of the present invention, there is provided a combined flange-finisher and glass-run channel to be secured to a flange around a window opening of a motor vehicle and comprising, in cross-section, a first channel-shaped portion adapted to grip and be retained on a flange and a second channel-shaped portion, adapted to receive and guide a pane of glazing material, the said first and second channel-shaped portions being oppositely directed and having a self-sustaining reinforcing carrier member which is either fully or partially provided with an elastomeric coating, wherein the carrier member is formed from a thermoplastics material which is rigid at ambient temperatures and flexible at an elevated temperature at which the said elastomeric material is substantially stable; characterised in that carrier member formed of the thermoplastics material includes an electrically conductive component to enable the carrier to be heated by an induction technique.

There is also provided, in accordance with the invention, secured or otherwise fastened around the periphery of a motor vehicle body opening or a closure for a motor vehicle body opening, the elongate strip according to the first aspect of this invention.

The parts formed in accordance with the present invention may be provided with a low-friction coating (e.g. a flock) over areas which are to slide in contact with a pane of glazing material.

As has been stated above, the elongate strip of the present invention is formed by an extrusion technique in which the carrier member formed of thermoplastics material is introduced into an extruder and onto which there is coated the elastomeric material in a manner known per se. The extrudate emerging from the extrusion die is subsequently cured (in the case of a rubber coating) or allowed to cool (for a plastics coating) and the extrudate is then cut to the desired length. These lengths of extrudate will possess a "secondary" structure in so far as the cross-section of the extrudate will have a particular configuration as required. However, a degree of "tertiary" structure may be imparted to the length of extrudate by locally heating certain regions of the extrudate in order to soften the carrier member formed of thermoplastics material and permit the length of extrudate to be bent or formed at the locally heated areas to the desired shape. The local heating is achieved by induction heating, and for this purpose the carrier member formed of thermoplastics material has an electrically conductive component preferably selected from a metal content, a metallic coating or a longitudinal foil element. The bending may be conducted with an associated stretching operation to ensure that regions at the inside of the bend do not buckle. The bent length of extrudate may then be allowed to cool and the thermoplastics carrier again becomes rigid. This operation is much more economic and simple to perform than the stretch-bending technique which is currently used for bending extrudates having solid steel carrier members.

Thus, according to a process aspect of the present invention, there is provided a process for treating an elongate strip comprising the steps of:
(i) providing an elongate structure of constant cross-section which has a shape-sustaining reinforcing carrier member bonded to which is a region of a relatively soft elastomeric material, said carrier member being formed from a thermoplastic material which is rigid at ambient temperatures and flexible at an elevated temperature at which the said elastomeric material is substantially stable, wherein the carrier member formed of thermoplastics material includes an electrically conductive component to enable the carrier to be heated by an induction technique;
(ii) raising the temperature of the carrier member, by induction heating the electrically conductive component, to at least the said elevated temperature and, whilst maintaining the temperature, forming the structure to a desired shape; and
(iii) permitting the structure to cool.

The elongate structure provided in step (i) may be formed by a continuous extrusion technique.

The carrier member formed of thermoplastics material may be itself extruded as a flat strip from a suitable compounding mixture; alternatively, the carrier member may be cut from a flat sheeting. Before extrusion, the flat carrier member (or blank) may be formed into the desired cross-section by the technique of roll-forming in which the flat carrier member is heated (so that it is flexible) and is then passed through a series of rollers which progressively shape the blank to the desired cross-section whereupon it is allowed to cool.

Included in the composition from which the carrier member is formed is a material which enables the carrier itself to be locally heated and thus reduce further any likelihood of damage to the elastomeric coating. Thus, if an electrically conductive component is included in the composition from which the carrier is formed, or if a longitudinal foil element is included in the carrier member, then heat can be concentrated in the carrier member using an induction technique. This will enable heat energy in the carrier member to be concentrated whilst the part is formed or bent following which the whole part can be quickly quenched before any damage is done to the elastomeric coating.

In the present invention, the elastomeric coating may be provided over the entire carrier member or only to parts of the carrier member. In one embodiment of a sealing strip in accordance with the present invention, the carrier member may be exposed to provide a surface having low friction properties for sliding in contact with a pane of glazing material. In such circumstances the carrier member may be made from a material such as polypropylene which has inherent low friction properties; as an alternative to the use of polypropylene, a thermoplastics material including an additive (e.g. PTFE) which imparts low friction properties to the thermoplastics material may be employed. This aspect of the present invention may be utilised for the inner surface of a glass-run channel.

For a better understanding of the present invention and to show how the same may be carried into effect, reference will now be made to the accompanying drawings in which:
Figure 1 illustrates a cross-section through an extruded sealing strip;
Figure 2 schematically represents a forming operation in accordance with the present invention to form a sealing strip having a desired tertiary structure; and
Figure 3 shows a modified version of the sealing strip shown in Figure 1.

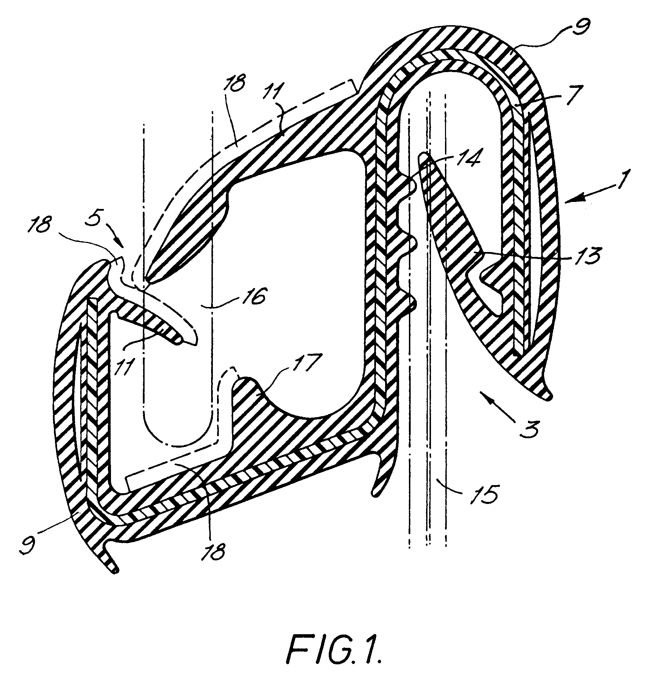

The strip 1 shown in Figure 1 is a combined flange-finisher glass-run channel of the type shown in EP-A-0277425 which enables a glass pane to be guided in substantially flush fashion with the adjacent bodywork of the motor vehicle. The section shown comprises a first U-shaped channel 3 and a second U-shaped glass-run channel 5 which is inversely disposed to the first channel 3. However, the strip is provided with a rigid carrier member 7 in accordance with the present invention which is coated with relatively soft, elastomeric material 9. The elastomeric material also extends to form sealing projections 11 in the glass-run channel 5 and gripping elements 13 and 14 which project into the first channel 3. In use of the section shown in Figure 1, the first channel 3, which is a flange-finisher portion, is received over a flange or pinch weld 15 of a motor vehicle around a door window opening. A pane of glazing material 16 may be received in the glass-run channel where it is held in position by the sealing lips 11 and a further formation 17 at the base of the glass-run channel 5. The regions of the elastomeric coating 9 and lips 11 with which the glass may come into contact is coated with a friction reducing material at regions 18, for example a flocking material. A sealing strip having the cross-section shown in Figure 1 may be extruded using conventional extrusion machinery using a rubber, such as EPDM rubber, as the coating material.

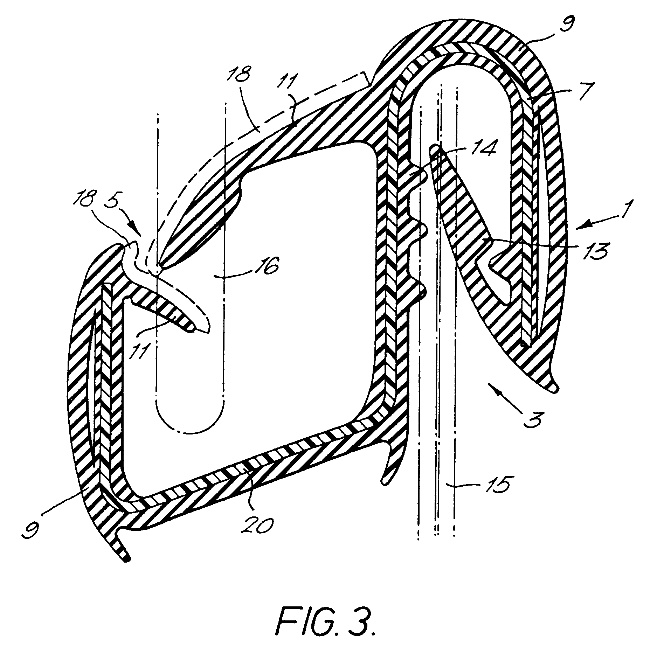

As shown in Figure 3, the coating on the carrier 7 may be partial such that the carrier member 7 is exposed at the base of the glass-run channel. Otherwise, the elements shown in Figure 3 are identical with the elements of the sealing strip shown in Figure 1.

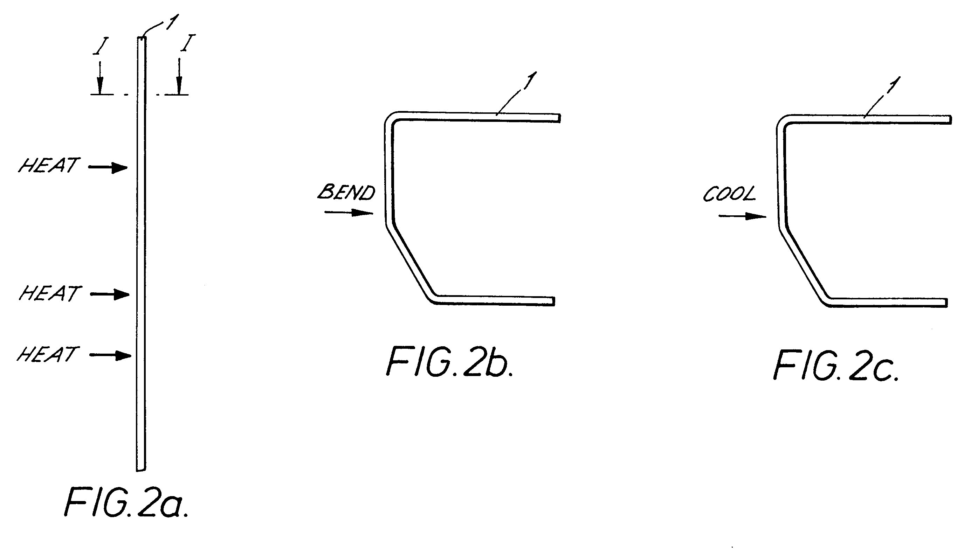

In accordance with the invention, the carrier member 7 of the strip shown in Figure 1 and 3 is formed from a thermoplastics material which is rigid at ambient temperatures and flexible at an elevated temperature at which the elastomeric coating is substantially stable. An example of a suitable thermoplastics material is a polypropylene having the desired hardness characteristics. The thermoplastics material should be sufficiently rigid to provide the necessary shape-sustaining characteristics to the overall configuration of the sealing strip, and yet it be capable of being softened, on the application of heat by induction heating, in order to enable the sealing part to be formed into a desired configuration. Thus, with reference to Figure 2, it will be seen that a length of sealing strip 1, which may have the crosssection shown in Figure 1, may be heated at three positions by the induction heating technique in order to elevate the temperature of the sealing strip at those points above that at which the thermoplastics material of the carrier member becomes flexible. Equipment is then employed to stretch and bend the length of sealing strip 1 in order to form a component having a desired configuration (Figure 2b). This is permitted to cool (Figure 2c) to form the finished part which possess the necessary degree of rigidity to act as a reinforced sealing part for a motor vehicle.

As shown in Figure 3, the carrier member formed of thermoplastics material 7 is exposed at location 20. The material from which the thermoplastics carrier is made is chosen to have friction-reducing properties which are either inherent in the thermoplastics material (for example polypropylene) or are introduced by way of a friction reducing additive such as PTFE. This dispenses with the need for flocking at the base of the glass-run channel 5.

## Claims

1. An elongate strip comprising a longitudinal reinforcing carrier member bonded to which is a region of a relatively soft elastomeric material, wherein the carrier member is formed from a thermoplastics material which is rigid at ambient temperatures and flexible at an elevated temperature at which the said elastomeric material is substantially stable, characterised in that the carrier member formed of thermoplastics material includes an electrically conductive component to enable the carrier member to be heated by an induction technique.

2. An elongate strip according to claim 1, wherein the electrically conductive component comprises a metal content, a metallic coating or a longitudinal foil element.

3. An elongate strip according to claim 1 or 2, wherein the region of said elastomeric material comprises a full or partial coating on the carrier member.

4. An elongate strip according to claim 1, 2 or 3, wherein the region of said elastomeric material bonded to the carrier member is in the form of one of more than one projection which projects from the carrier member to define sealing or gripping elements.

5. An elongate strip according to any preceding claim, wherein at least a portion of the carrier member is exposed, the thermoplastics material from which the carrier member is made having friction-reducing properties.

6. An elongate sealing strip for sealing around the periphery of a vehicle body opening or a closure for a vehicle body opening, comprising a channel-shaped portion having a longitudinal reinforcing carrier member bonded to which is a region of a relatively soft elastomeric material, wherein the carrier member is formed from a thermoplastics material which is rigid at ambient temperatures and flexible at an elevated temperature at which the said elastomeric material is substantially stable; characterised in that the carrier member formed of thermoplastics material includes an electrically conductive component to enable the carrier member to be heated by an induction technique.

7. A combined flange-finisher and glass-run channel to be secured to a flange around a window opening of a motor vehicle and comprising, in crosssection, a first channel-shaped portion adapted to grip and be retained on a flange and a second channel-shaped portion, adapted to receive and guide a pane of glazing material, the said first and second channel-shaped portions being oppositely directed and having a self-sustaining reinforcing carrier member which is either fully or partially provided with an elastomeric coating, wherein the carrier member is formed from a thermoplastics material which is rigid at ambient temperatures and flexible at an elevated temperature at which the said elastomeric material is substantially stable; characterised in that the carrier member formed of thermoplastics material includes an electrically conductive component to enable the carrier to be heated by an induction technique.

8. Secured at or around the periphery of a motor vehicle body opening or a closure for a motor vehicle body opening, an elongate strip comprising a longitudinal reinforcing carrier member bonded to which is a region of a relatively soft elastomeric material, wherein the carrier member is formed from a thermoplastics material which is rigid at ambient temperatures and flexible at an elevated temperature at which the said elastomeric material is substantially stable; characterised in that the carrier member formed of thermoplastics material includes an electrically conductive component to enable the carrier to be heated by an induction technique.

9. A strip as claimed in claim 6, a channel as claimed in claim 7, or the strip as specified in claim 8, wherein the electrically conductive component comprises a metal content, a metallic coating or a longitudinal foil element.

10. A method of treating an elongate strip comprising the steps of:
(i) providing an elongate structure of constant cross-section which has a shape-sustaining reinforcing carrier member bonded to which is a region of a relatively soft elastomeric material, said carrier member being formed from a thermoplastic material which is rigid at ambient temperatures and flexible at an elevated temperature at which the said elastomeric material is substantially stable, wherein the carrier member formed of thermoplastics material includes an electrically conductive component to enable the carrier to be heated by an induction technique;
(ii) raising the temperature of the carrier member, by induction heating the electrically conductive component, to at least the said elevated temperature and, whilst maintaining the temperature, forming the structure to a desired shape; and
(iii) permitting the structure to cool.

## Patentansprüche

1. Langgestreckter Streifen mit einem längsgerichteten Verstärkungsträgerglied, an welchem ein Bereich eines relativ weichen Elastomermaterials festgelegt ist, bei welchem das Trägerglied aus einem thermoplastischen Material geformt ist, welches bei Umgebungstemperatur steif und bei einer erhöhten Temperatur, bei welcher das Elastomermaterial im wesentlichen stabil ist, flexibel ist, **dadurch gekennzeichnet**, daß das Trägerglied aus thermoplastischem Material einen elektrisch leitenden Bestandteil aufweist, um zu ermöglichen, daß das Trägerglied mittels Induktionstechnik erhitzt wird.

2. Langgestreckter Streifen nach Anspruch 1, bei welchem der elektrisch leitende Bestandteil einen Metallkern, einen metallenen Überzug oder ein längsgerichtetes Folienelement enthält.

3. Langgestreckter Streifen nach Anspruch 1 oder 2, bei welchem der Bereich des Elastomermaterials einen vollständigen oder teilweisen Überzug auf dem Trägerglied darstellt.

4. Langgestreckter Streifen nach einem der Ansprüche 1 bis 3, bei welchem der Bereich des Elastomermaterials, welches an dem Trägerglied befestigt ist, die Form eines von mehreren Vorsprüngen darstellt, welche von dem Trägerglied vorspringen, um Dicht- oder Einspannelemente zu bilden.

5. Langgestreckter Streifen nach einem der vorhergehenden Ansprüche, bei welchem wenigstens ein Abschnitt des Trägergliedes frei liegt, wobei das thermoplastische Material, aus welchem das Trägerglied hergestellt ist, reibungsreduzierende Eigenschaften hat.

6. Langgestreckter Dichtstreifen zum Abdichten um den Außenumfang einer Fahrzeugkarosserieöffnung oder eines Verschlusses für eine Fahrzeugkarosserieöffnung, mit einem kanalförmigen Abschnitt mit einem längsgerichteten Verstärkungsträgerglied, an welchem ein Bereich eines relativ weichen Elastomermaterials festgelegt ist, bei welchem das Trägerglied aus einem thermoplastischen Material geformt ist, welches bei Umgebungstemperatur steif und bei einer erhöhten Temperatur, bei welcher das Elastomermaterial im wesentlichen stabil ist, flexibel ist, **dadurch gekennzeichnet**, daß das Trägerglied aus thermoplastischem Material einen elektrisch leitenden Bestandteil aufweist, um zu ermöglichen, daß das Trägerglied mittels Induktionstechnik erhitzt wird.

7. Kombination aus Flanschabschluß und Glasführungskanal zur Befestigung an einem Flansch um eine Fensteröffnung eines Kraftfahrzeugs mit - im Querschnitt gesehen - einem ersten kanalförmigen Abschnitt, welcher dazu geeignet ist, einen Flansch zu ergreifen und an ihm gehalten zu werden, und einem zweiten kanalförmigen Abschnmitt, welcher dazu geeignet ist, eine Scheibe aus Verglasungsmaterial aufzunehmen und zu führen, wobei die ersten und zweiten Kanalabschnitte einander entgegengesetzt sind und ein selbsttragendes Verstärkungsträgerglied haben, welches entweder vollständig oder teilweise mit einem Elastomerüberzug versehen ist, wobei das Trägerglied aus einem thermoplastischen Material hergestellt ist, welches bei Umgebungstemperatur steif und bei einer erhöhten Temperatur, bei welcher das Elastomermaterial im wesentlichen stabil ist, flexibel ist, **dadurch gekennzeichnet**, daß das aus thermoplastischem Material hergestellte Trägerglied einen elektrisch leitenden Bestandteil enthält, um zu ermöglichen, daß der Träger durch Induktionstechnik erhitzt wird.

8. Langgestreckter Streifen, welcher an oder um den Außenumfang einer Kraftfahrzeugkarosserieöffnung oder einem Verschluß für eine Kraftfahrzeugkarosserieöffnung festgelegt ist, mit einem längsgerichteten Verstärkungsträgerglied, an welchem ein Bereich eines relativ weichen Elastomermaterials festgelegt ist, wobei das Trägerglied aus einem thermoplastischen Material geformt ist, welches bei Umgebungstemperatur steif und bei einer erhöhten Temperatur, bei welcher das Elastomermaterial im wesentlichen stabil ist, flexibel ist, **dadurch gekennzeichnet**, daß das Trägerglied aus thermoplastischem Material einen elektrisch leitenden Bestandteil enthält, um zu ermöglichen, daß der Träger durch Induktionstechnik zu erhitzt wird.

9. Streifen nach Anspruch 6, Kanal nach Anspruch 7 oder Streifen nach Anspruch 8, bei welchem der elektrisch leitende Bestandteil einen Metallkern, einen metallenen Überzug oder ein längsgerichtetes Folienelement aufweist.

10. Verfahren zum Behandeln eines langgestreckten Streifens mit folgenden Schritten:
(i) Vorsehen eines langgestreckten Gebildes von konstantem Querschnitt, welches ein gestalterhaltendes Verstärkungsträgerglied aufweist, an welchem ein Bereich eines relativ weichen Elastomermaterial festgelegt ist, wobei das Trägerglied aus einem thermoplastischen Material geformt ist, welches bei Umgebungstemperatur steif und bei einer erhöhten Temperatur, bei welcher das Elastomermaterial im wesentlichen stabil ist, flexibel ist, wobei das Trägerglied aus thermoplastischem Material einen elektrisch leitenden Bestandteil enthält, um zu ermöglichen, daß der Träger durch Induktionstechnik erhitzt wird,
(ii) Anheben der Temperatur des Trägergliedes durch Induktionsbeheizung des elektrisch leitenden Bestandteils auf wenigstens die genannte erhöhte Temperatur und, bei Aufrechterhaltung der Temperatur, Formen des Gebildes zu einer gewünschten Gestalt, und
(iii) Abkühlenlassen des Gebildes.

## Revendications

1. Bande allongée comprenant un élément support, de renfort longitudinal, auquel est unie une partie en matériau élastomère relativement tendre, sachant que l'élément support est fait d'un matériau thermoplastique qui est rigide aux températures ambiantes et souple à une température élevée à laquelle ledit matériau élastomère est sensiblement stable,
caractérisée en ce que l'élément support fait d'un matériau thermoplastique contient un composant conducteur de l'électricité qui permet audit élément support d'être chauffé par une technique d'induction.

2. Bande allongée selon la revendication 1, dans laquelle le composant conducteur de l'électricité comprend un élément en métal, un revêtement métallique ou une feuille métallique longitudinale.

3. Bande allongée selon la revendication 1 ou 2, dans laquelle ladite partie en matériau élastomère comprend un revêtement total ou partiel sur l'élément support.

4. Bande allongée selon la revendication 1, 2 ou 3, dans laquelle ladite partie en matériau élastomère unie à l'élément support a la forme d'une ou plusieurs saillies qui dépassent de l'élément support pour définir des éléments d'accrochage ou de scellement.

5. Bande allongée selon l'une quelconque des précédentes revendications, dans laquelle une partie au moins de l'élément support est dénudée, le matériau thermoplastique dont est fait l'élément support ayant des propriétés de réduction des frottements.

6. Bande allongée d'étanchéité à sceller autour de la périphérie d'un ouvrant de la carcasse d'un véhicule ou d'une fermeture destinée à un ouvrant de la carcasse d'un véhicule, comprenant une partie en forme de gorge avec un élément support, de renfort longitudinal, auquel est unie une partie en matériau élastomère relativement tendre, sachant que l'élément support est fait d'un matériau thermoplastique qui est rigide aux températures ambiantes et souple à une température élevée à laquelle ledit matériau élastomère est sensiblement stable, caractérisée en ce que l'élément support fait d'un matériau thermoplastique contient un composant conducteur de l'électricité qui permet audit élément support d'être chauffé par une technique d'induction.

7. Profil combiné de chaussure de glace et de finition de rebord, à fixer à un rebord situé autour d'une ouverture de fenêtre d'un véhicule à moteur et comprenant, en coupe, une première partie en forme de gorge apte à se pincer sur un rebord et à y être retenue, et une seconde partie en forme de gorge apte à recevoir et guider un panneau de verte, lesdites première et seconde parties en forme de gorges étant dirigées en sens opposés et comportant un élément support de renfort, auto-porteur, qui est pourvu, soit totalement soit partiellement, d'un revêtement élastomère, sachant que l'élément support est fait d'un matériau thermoplastique qui est rigide aux températures ambiantes et souple à une température élevée à laquelle ledit matériau élastomère est sensiblement stable, caractérisé en ce que l'élément support fait d'un matériau thermoplastique contient un composant conducteur de l'électricité qui permet audit élément support d'être chauffé par une technique d'induction.

8. Bande allongée, fixée sur la périphérie ou autour de la périphérie d'un ouvrant de la carcasse d'un véhicule à moteur ou d'une fermeture destinée à un ouvrant de la carcasse d'un véhicule à moteur, comprenant un élément support, de renfort longitudinal, auquel est unie une partie en matériau élastomère relativement tendre, sachant que l'élément support est fait d'un matériau thermoplastique qui est rigide aux températures ambiantes et souple à une température élevée à laquelle ledit matériau élastomère est sensiblement stable, caractérisée en ce que l'élément support fait d'un matériau thermoplastique contient un composant conducteur de l'électricité qui permet audit élément support d'être chauffé par une technique d'induction.

9. Bande selon la revendication 6, profil selon la revendication 7 ou bande selon la revendication 8, dans lesquels le composant conducteur de l'électricité comprend un élément en métal, un revêtement métallique ou une feuille métallique longitudinale.

10. Procédé de traitement d'une bande allongée, comprenant les étapes consistant à :
(i) préparer une structure allongée, de section constante, qui comporte un élément support de renfort et de préservation de la forme auquel est unie une partie en matériau élastomère relativement tendre, ledit élément support étant fait d'un matériau thermoplastique qui est rigide aux températures ambiantes et souple à une température élevée à laquelle ledit matériau élastomère est sensiblement stable, sachant que l'élément support fait d'un matériau thermoplastique contient un composant conducteur de l'électricité qui permet audit élément support d'être chauffé par une technique d'induction,
(ii) élever la température de l'élément support, par chauffage par induction du composant conducteur de l'électricité, au moins jusqu'à ladite température élevée et, tout en maintenant la température, donner à la structure une forme souhaitée, et
(iii) laisser la structure refroidir.
